Europäisches Patentamt

European Patent Office

Office européen des brevets

(19)

(11) EP 1 071 186 A1

(12) **EUROPEAN PATENT APPLICATION**

(43) Date of publication:
24.01.2001 Bulletin 2001/04

(51) Int Cl.7: **H02J 13/00**

(21) Application number: **99305563.1**

(22) Date of filing: **14.07.1999**

(84) Designated Contracting States:
**AT BE CH CY DE DK ES FI FR GB GR IE IT LI LU
MC NL PT SE**
Designated Extension States:
**AL LT LV MK RO SI**

(71) Applicant: **BCN Data Systems Inc.**
**Newcastle, Staffs ST5 3BA (GB)**

(72) Inventors:
• **Jones, Alan J.**
**Newcastle, Staffs ST5 3BA (GB)**

• **Smith, Mitchell D.**
**San Francisco, California 94113 (US)**

(74) Representative: **Hutchinson, Glenn Stanley et al**
**Harrison Goddard Foote,**
**Fountain Precinct,**
**Leopold Street**
**Sheffield S1 2QD (GB)**

(54) **Detecting and mapping power line loss in a power network**

(57)     Systems and methods for detecting and mapping power loss in a wired power network having at least one feeder node (39,43) wired to a plurality of meter nodes by a plurality of power lines are described. In accordance with this inventive detecting and mapping scheme, a coomunication signal is sent from feeder node to the plurality of meter nodes over the power lines, the communication signal is received at the meter nodes, and a signal representative of the received communication signal is transmitted from the meter nodes to a system controller.

FIG. 1B

**Description**

Background of the Invention

The invention relates to detecting and mapping loss in an electrical power distribution network.

The generation and distribution of electrical energy inherently involves a certain amount of power loss. In general, electrical power is supplied from the generation plant to a plurality of customers over the distribution network. As a result of transmission some loss will occur. In the high voltage network, losses (e.g., resistive losses) are governed by the physical laws relating to the distribution of electrical power over a physical network and, therefore, are inherent losses and are not easy to eliminate. At other points on the distribution network other, non-inherent losses (e.g., losses caused by theft and equipment failure), on the other hand, may be substantially eliminated if sufficient resources are expended to address the problem. Among the obstacles impeding current efforts to reduce non-inherent losses are the problems associated with detecting power line loss and mapping (or determining the physical location) where the detected power line loss has occurred.

Summary of the Invention

The invention features systems and methods for detecting and mapping power loss in a wired power network having at least one feeder node wired to a plurality of meter nodes by a plurality of power lines. In accordance with this inventive detecting and mapping scheme, a communication signal is sent from the feeder node to the plurality of meter nodes over the power lines, the communication signal is received at the meter nodes, and a signal representative of the received communication signal is wirelessly transmitted from the meter nodes to a system controller.

In a particular aspect, a system of the invention includes a signal injector constructed and arranged to send a communication signal from the feeder node to the plurality of meter nodes over the power lines, and a plurality of meters respectively located at the plurality of meter nodes, each of the meters including a receiver for receiving the communication signal and a transmitter for transmitting a signal representative of the received communication signal to a system controller.

Embodiments may include one or more of the following features.

The signal injector may be configured to send the communication signal to the meter nodes by modulating a supply voltage waveform carried by the power lines. The signal injector preferably modulates the supply voltage waveform in a region of zero cross-over. The communication signal may be formed from a series of modulated supply voltage waveform cycles. The communication signal may contain an identifier corresponding to the location of the feeder node. The communication signal may contain a trigger for synchronizing the meter nodes.

A meter may be provided to monitor the total power supplied to the meter nodes.

The plurality of meters may form a layer of a wireless network that further includes an intermediate node and the system controller.

In another aspect of the invention, the power consumed at the meter nodes is measured and the sum of the consumed power measured at the meter nodes is compared with the total supplied power measured at the feeder node. In accordance with this method, the change in power supplied from the feeder node may be computed, and one or more meters that have experienced a change in load may be identified. The total change in load experienced by the one or more identified meters may be compared with the corresponding computed change in power supplied to the meters from the feeder node.

Among the advantages of the invention are the following. The invention enables power network administrators to detect inaccurate meters and to identify meters which have been compromised or otherwise are not working properly. The ability to map power loss in a power distribution network increases the power distribution efficiency of the system and provides other operational, strategic and external benefits. Because the communication signal permeates the entire power distribution network, the invention accommodates future network changes without requiring the installation of additional feeder meters.

Other features and advantages will become apparent from the following description, including the drawings and the claims.

Brief Description of the Drawings

Fig. 1A is block diagram of a typical power distribution network.

Fig. 1B is a block diagram of the medium and low voltage portions of the power distribution network of Fig. 1A.

Fig. 2 is a block diagram of a wireless metering network.

Fig. 3A is a diagrammatic view of a power supply waveform and a modulation signal.

Fig. 3B is a diagrammatic view of a power supply waveform modulated by a communication signal.

Fig. 4A is a circuit diagram of a signal injector and a feeder transformer.

Fig. 4B is a circuit diagram of the signal injector of Fig. 4A.

Fig. 5 is a flow diagram of a method of detecting and mapping power line loss.

Detailed Description

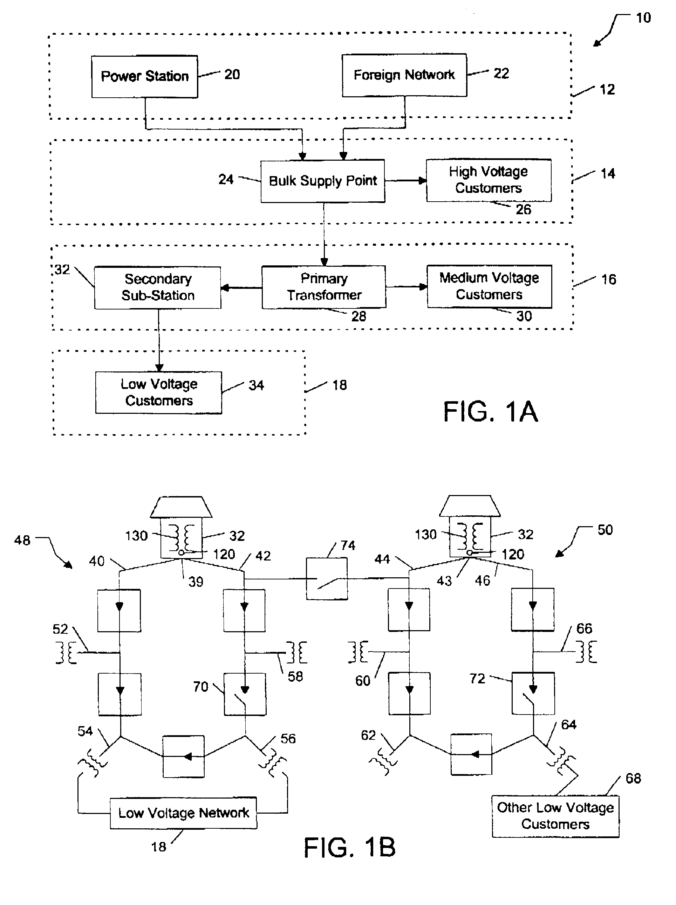

Referring to Fig. 1A, a power distribution network 10 includes a very high voltage (VHV) network 12, a high voltage (HV) network 14, a medium voltage (MV) network 16, and a low voltage (LV) network 18. In order to reduce resistive losses associated with the long-distance transmission of electrical power, the power station 20 supplies electrical power to the network at a significantly higher voltage than that required by the end user. The voltage from the power station is reduced at a number of stages, the final stage is at the substation which is configured to reduce the voltage from typically about 11 kV to 415 volts, a voltage which is distributed by the low voltage network. LV network 18 includes a plurality of low voltage customers 34 which receive power from secondary substation 32 at a supply voltage of about 220-240 volts. The components of power distribution network 10 are interconnected by power lines.

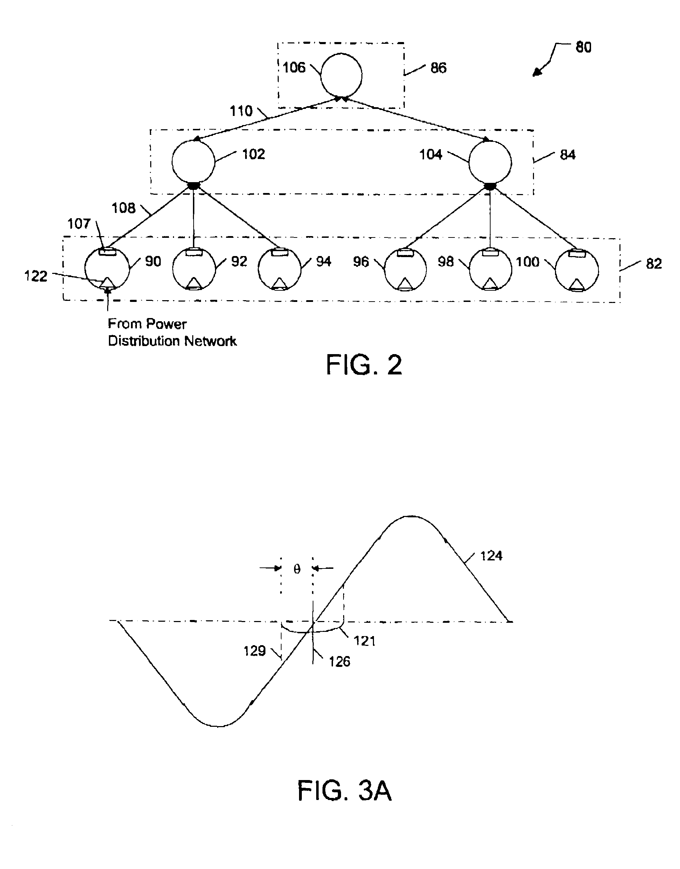

As shown in Fig. 1B, in one implementation, secondary substations 32 include a plurality of feeders 40, 42, 44, 46 that extend from feeder nodes 39, 43 to form a pair of ring networks 48, 50. Feeder nodes 39, 43 may include respective meters (which may be constructed as described below in connection with the metering network of Fig. 2) that are configured to measure the total power supplied through feeder nodes 39, 43 and to transmit the measurement information to a system controller. A plurality of spurs 52, 54, 56, 58, 60, 62, 64, 66 extend from ring networks 48, 50 to provide power to LV network 18 and to other low voltage customers 68. Switch points 70, 72 are positioned at nodes to reconnect feeders or to connect to other transformers. A link point 74 may be used to couple ring networks 48, 50.

Referring back to Fig. 1A, each of the customers 26, 30, 34 is coupled to power distribution network 10 at a terminal node which includes a meter that is configured to measure the amount of electrical consumed at the corresponding terminal node. As explained below, this measurement information may be transmitted over a wireless metering network to a system controller which is configured to analyze the measurement information, prepare billing statements and monitor the operation of power distribution system 10.

Referring to Fig. 2, in one embodiment, a metering network 80 has at least three functional levels: a measurement level 82, a collection level 84, and a monitoring level 86. The measurement level 82 periodically measures a parameter (e.g., electricity usage (kilowatt-hours)) at each of the meter nodes. The collection level 84 analyzes the periodic measurements to generate a metered function of the parameter at each location. The metered function information could be the minimum, maximum or average value of the parameter over a certain time period. The monitoring level 86 controls the collection level 84 and receives the metered function information. The operator of metering network 80 determines how monitoring level 86 uses the metered function information.

Measurement level 82 includes meters or telemetry devices 90, 92, 94, 96, 98, 100 which are configured to measure the parameter of interest and transmit the measurement to collection level 84. Although only six meters are shown, measurement level 82 may include thousands or even hundreds of thousands of meters. The meters are located as required for a particular application. For example, an electrical utility company could place one meter at each house in a residential neighborhood to measure electrical energy consumption. Each meter may have the same construction.

Collection level 84 includes collectors 102, 104 which are located to receive transmissions from the meters. Each collector analyzes the periodic measurements by one or more meters to generate a metered function. For example, an electrical utility company could configure the collectors to determine the electricity consumed each hour over the last twenty-four hours, the total amount of electricity consumed between 6 p.m. and 8 p.m. over the last month, and the time of peak electricity consumption in the previous day, at each house in a residential neighborhood.

Monitoring level 86 includes a system controller (or monitoring station) 106 which is configured to receive, store and manipulate the metered functions received from collection level 84. The functions of monitoring level 86 depend upon the intended application for metering system 80. For example, an electrical utility company could use monitoring level 86 to generate a billing for each house in a residential neighborhood at the end of each month.

Each meter 90-100 in metering level 82 includes a transmitter 107 for periodically sending meter measurements to collection level 84 by means of transmissions 108, which may be in the form of any sort of wireless signals (e.g., radio frequency, microwave, and infrared signals). Each collector 102, 104 receives transmissions from one or more meters. For example, collector 102 may receive transmissions from meters 90-94. A collector may receive transmissions from fifty to one thousand meters, more preferably two hundred to five hundred meters. Each collector and its associated meters form a "cell". Meters 90-100 may be "transmit only" devices; i.e., the meters are not able to receive missions from collectors 102, 104. Each meter 90-100 may have only enough processing power to perform measurements and transmit the measurements to collection level 84.

Although only two collectors are shown, collection level 84 may include hundreds or thousands of collectors, depending upon the number of meters in metering level 82. Collectors 102, 104 communicate with system controller 106 in monitoring level 86 by two-way wired or wireless transmissions 110. Preferably, for wireless communication, some or all of the collectors are positioned at elevated locations (e.g., placed on a telephone pole) to facilitate the reception of transmissions from meters 90-100 and system controller 106.

As mentioned above, the distribution of electrical power over power distribution network 10 involves both inherent and non-inherent losses. Inherent losses may be reduced by proper network design and operation; but these losses cannot be eliminated. Certain non-inherent losses, such as losses resulting from equipment failure, may be reduced-- but not eliminated -- by proper selection of network equipment. Other non-inherent losses (e.g., losses resulting from theft), however, may be reduced substantially if sufficient resources are deployed to address the problem. The inventive systems and methods described below may be used to detect and map power line losses that occur in power distribution network 10. The information provided by these systems and methods may be used to substantially reduce certain non-inherent power line losses in an efficient and cost-effective way.

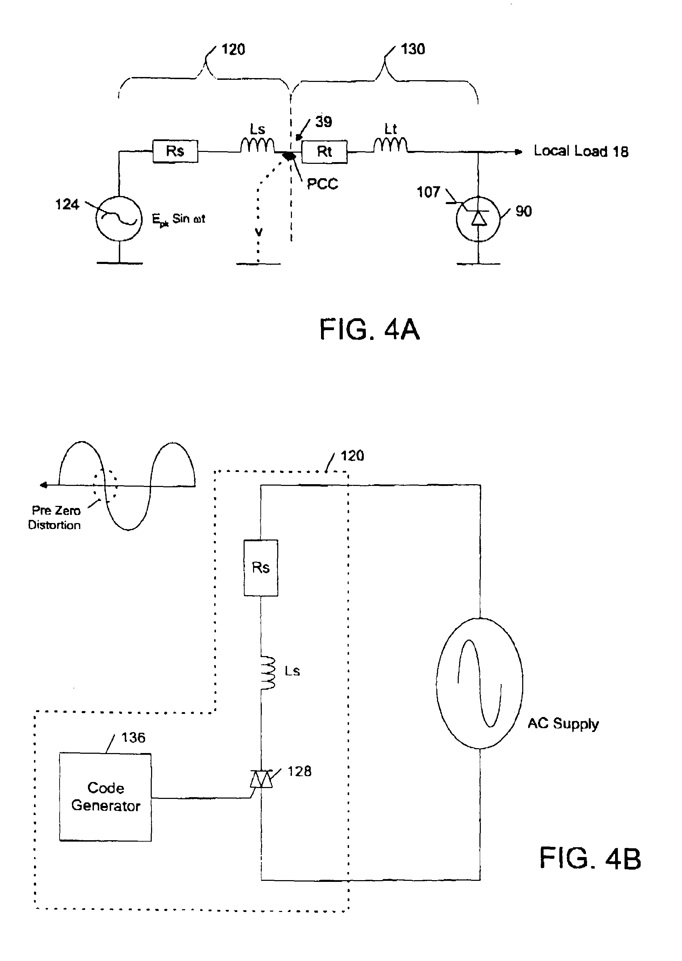

Referring to Figs. 2, 3A, 3B, 4A and 4B, in one embodiment, a signal injector 120 (e.g., an injection transformer) is constructed to send a communication signal from each of feeder nodes 39, 43 (Fig. 1B) to the meters at meter nodes 90-100 over the power lines of power distribution network 10. Each of the meters receives the communication signal over the power lines with a receiver 122 and wirelessly transmits a signal representative of the received communication signal to system controller 106 with transmitter 107. Signal injector 120 is implemented as a power line carrier (PLC) transmitter which uses the existing power lines as a communication network. Signal injector 120 may be attached permanently to power distribution network; alternatively, signal injector 120 may be attached on an ad hoc basis.

Signal injector 120 is configured to send the communication signal over the power lines by modulating supply voltage waveform 124 (e.g., of the form $E_{pk}$ $\mathrm{Sin}(\omega t)$) near the zero crossover point 126. In particular, signal injector 120 distorts supply voltage waveform 124 in the region of zero crossover. In this way, a relatively high communication signal amplitude may be used without significant disturbance to the RMS (root mean square) value of the supply voltage. The disturbance of supply voltage waveform 124 is created using a thyristor 128 connected between each phase and neutral of the transformers 130 of secondary substations 32. Thyristor 128 is switched at a point 129 on voltage waveform 124 that is displaced by a switching angle θ (e.g., about 25°) before a zero crossing.

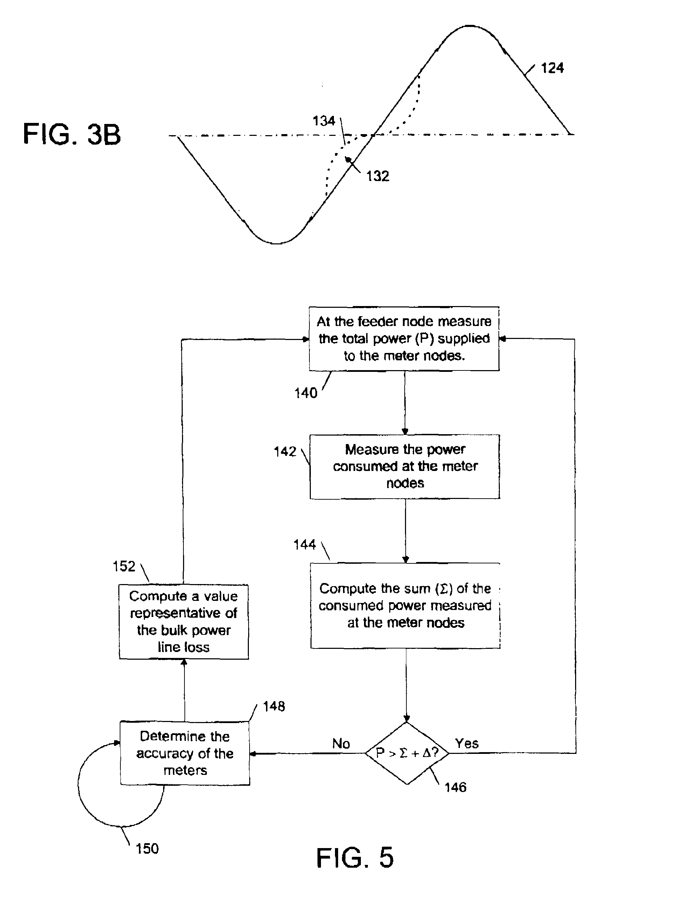

As shown in Fig. 3B, the resulting current produces a depression 132 of the supply voltage waveform 124 at the point of common crossing (PCC), the value of which depends upon the relative impedances $R_s$, $L_s$, $R_t$ and $L_t$. The thyristor current is limited by DC (direct current) transients to about 10% of the peak prospective fault current, and turns off upon returning to zero as a result of the unidirectional characteristic of the thyristor. The line to neutral voltage at the transmitter terminals collapses to near zero for the duration of the current flow. The resulting supply voltage waveform 134 is described in percentage terms, where signal strength (S) is expressed as the percentage change of instantaneous voltage (δv) with respect to the normal sinusoidal waveform (v):

$$S = \frac{\delta v}{v} \times 100\%$$

Signals are received between line and neutral at any low voltage point supplied from the same secondary substation transformer 130. The communication signals are detected by integrating supply voltage waveform 134 during a small fixed period before each positive-going zero crossing. The amplitude of each integral is compared with that of the previous supply cycle in order to determine whether the difference exceeds a preset value (the receiver setting), in which case a communication signal is assumed to have been detected. The meters construct the communication signal message from a number of individual cycles, altered in a coded pattern which is produced by a code generator 136. The communication signal may be encoded with a tag which identifies the feeder to which meter 90 is connected. As mentioned above, meters 90-100 include receivers 122 which are configured to receive and decode the communication signals sent by signal injector 120. This identification information may be transmitted to system controller 106 and used for controlling the system load and synchronizing particular events (e.g., synchronized meter reading events).

Referring to Fig. 5, in one embodiment, power line loss may be detected and mapped as follows. At a feeder node, the total power (P) supplied from the feeder node to the corresponding meter nodes is measured (step 140). At each of the corresponding meter nodes, the power consumed by the meter node is measured (step 142). The sum (Σ) of the power measured at the meter nodes is computed (step 144). If $P \leq \Sigma + \Delta$ (step 146), where $\Delta$ is a preselected value that accounts for inherent losses and a certain amount of meter inaccuracy, the power line loss is within an acceptable limit and the detection cycle is repeated (step 140).

If $P > \Sigma + \Delta$ (step 146), the power line loss may not be within acceptable limits. At this point, however, there is insufficient information to determine the cause of the power line loss. The power loss may be due to normal operation reasons, inaccurate or faulty meter operation, or theft. To determine whether the loss was caused by improper meter operation, the accuracy of the meters is determined (step 148) by comparing the meter measurements transmitted to system controller 106 against the total power supplied through the corresponding feeder node over a period that includes a plurality of meter transmission periods 150. For example, each time the meter at the feeder node detects a change in the total power supplied to the meter nodes, system controller 106 identifies the meters which have measured a change in load. If the sum of the reported meter load changes corresponds to the total power measured at the feeder node, the meters identified by system controller 106 are assumed to be accurate. In this case a value representative of the bulk loss (BL) may be computed as follows (step 152):

$$BL = P - (\Sigma + \Delta)$$

If the sum of the reported meter load changes does not correspond to the total power measured at the feeder node, one or more of the identified meters may be inaccurate. After a sufficient number of meter measurements have been compared against the feeder node measurements, system controller 106 may confirm the accuracy of each meter and compile lists of accurate and inaccurate meters. Inaccurate meters may then be replaced.

Other embodiments are within the scope of the claims. For example, the communication signal sent over the power lines by signal injector 120 may be used to trigger a special meter measurement or to synchronize the meter measurements because the communication signal effectively permeates the entire low voltage network connected to the feeder node. This feature of the injected communication signal may be used to eliminate the uncertainty caused by time jitter and to lock meter measurements in real time. Such a communication signal may replace a single master clock, which may be a component of signal injector 120, for the purpose of triggering a read event across the whole population of meters connected to the feeder node.

Still other embodiments are within the scope of the claims.

## Claims

1.  A system for detecting and mapping power loss in a wired power network having at least one feeder node wired to a plurality of meter nodes by a plurality of power lines, comprising:

    a signal injector constructed and arranged to send a communication signal from the feeder node to the plurality of meter nodes over the power lines; and
    a plurality of meters respectively located at the plurality of meter nodes, each of the meters including a receiver for receiving the communication signal and a transmitter for transmitting a signal representative of the received communication signal to a system controller.

2.  The system of claim 1, wherein the signal injector is configured to send the communication signal to the meter nodes by modulating a supply voltage waveform carried by the power lines.

3.  The system of claim 2, wherein the signal injector modulates the supply voltage waveform in a region of zero cross-over.

4.  The system of claim 2, wherein the communication signal is formed from a series of modulated supply voltage waveform cycles.

5.  The system of any preceding claim, wherein the communication signal contains an identifier corresponding to the location of the feeder node.

6.  The system of any preceding claim, further comprising a meter for monitoring the total power supplied to the meter nodes.

7.  The system of any preceding claim, wherein the communication signal contains a trigger for synchronising the meter nodes.

8.  The system of any preceding claim, wherein the plurality of meters form a layer of a wireless network that further includes an intermediate node and the system controller.

9.  A method for detecting and mapping power loss in a wired power network having at least one feeder node wired to a plurality of meter nodes by a plurality of power lines comprising:

    sending a communication signal from the feeder node to the plurality of meter nodes over the power lines;
    receiving the communication signal at the meter nodes; and
    transmitting a signal representative of the received communication signal from the meter nodes to a system controller.

10. The method of claim 9, wherein the communication signal is sent by modulating a supply voltage waveform carried by the power lines.

11. The method of claim 10, wherein the supply voltage waveform is modulated in a region of zero cross-over.

12. The method of claim 10, wherein the communication signal is formed from a series of modulated supply voltage waveform cycles.

13. The method of any of claims 9 to 12, further comprising measuring at the feeder node the total power supplied to the meter nodes.

14. The method of claim 13, further comprising measuring the power consumed at the meter nodes, and comparing the sum of the consumed power measured at the meter nodes with the total supplied power measured at the feeder node.

**15.** The method of claim 13, further comprising computing the change in power supplied from the feeder node.

**16.** The method of claim 15, further comprising identifying one or more meters that have experienced a change in load.

**17.** The method of claim 16, further comprising comparing a total change in load experienced by the one or more identified meters against the corresponding computer change in power supplied to the meters from the feeder node.

**18.** The method of any of claims 9 to 17, wherein the communication signal includes a trigger for synchronising the meter nodes.

**19.** The method of claim 18, further comprising transmitting meter measurement signals from each of the meter nodes upon receipt of the synchronising trigger signal.

**20.** The method of any of claims 9 to 19, further comprising receiving signals transmitted by the meter nodes at an intermediate node, processing the received meter node signals, and transmitting a signal representative of the processed signals to the system controller.

**Power Station** — 20

**Foreign Network** — 22

12

24 — **Bulk Supply Point** → **High Voltage Customers** — 26

14

32 **Secondary Sub-Station** ← **Primary Transformer** → **Medium Voltage Customers** — 30

28

16

**Low Voltage Customers** — 34

18

**FIG. 1A**

48

130 — 32

120 — 42

39

40

52

58

70

54

56

**Low Voltage Network**

18

74

44

130 — 32

120 — 46

43

60

66

72

62

64

**Other Low Voltage Customers** — 68

50

**FIG. 1B**

FIG. 2

FIG. 3A

## FIG. 3B

## FIG. 5

At the feeder node measure the total power (P) supplied to the meter nodes. — 140

Measure the power consumed at the meter nodes — 142

Compute the sum ($\Sigma$) of the consumed power measured at the meter nodes — 144

$P > \Sigma + \Delta$? — 146

Determine the accuracy of the meters — 148, 150

Compute a value representative of the bulk power line loss — 152

FIG. 4A

FIG. 4B

))) **European Patent
Office**

**EUROPEAN SEARCH REPORT**

Application Number

EP 99 30 5563

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 96 38897 A (PROCESS SYSTEMS ;BEARDEN MICHAEL KENT (US); JENRETTE WILLIAM IAN ()) 5 December 1996 (1996-12-05) * page 10, line 9 - page 14, line 6 * --- | 1,9 | H02J13/00 |
| A | US 4 914 418 A (MAK SIOE T ET AL) 3 April 1990 (1990-04-03) * abstract; figure 1A * --- | 2-4, 10-12 | |
| A | WO 96 18982 A (DELANEY PATRICK J) 20 June 1996 (1996-06-20) * abstract * ----- | 1,9 | |

TECHNICAL FIELDS
SEARCHED     (Int.Cl.7)

H02J
H04B

The present search report has been drawn up for all claims

| Place of search | Date of completion of the search | Examiner |
|---|---|---|
| BERLIN | 2 December 1999 | Hijazi, A |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
..........................................................................
& : member of the same patent family, corresponding
    document

EPO FORM 1503 03.82 (P04C01)

**EP 1 071 186 A1**

### ANNEX TO THE EUROPEAN SEARCH REPORT
### ON EUROPEAN PATENT APPLICATION NO.

EP 99 30 5563

02-12-1999

| Patent document cited in search report | | Publication date | Patent family member(s) | | Publication date |
|---|---|---|---|---|---|
| WO 9638897 | A | 05-12-1996 | US | 5627759 A | 06-05-1997 |
| | | | AU | 5984396 A | 18-12-1996 |
| | | | CA | 2224993 A | 05-12-1996 |
| | | | DE | 69601229 D | 04-02-1999 |
| | | | DE | 69601229 T | 19-08-1999 |
| | | | EP | 0829125 A | 18-03-1998 |
| | | | ZA | 9604487 A | 09-12-1996 |
| US 4914418 | A | 03-04-1990 | AT | 120319 T | 15-04-1995 |
| | | | AU | 629596 B | 08-10-1992 |
| | | | AU | 4761090 A | 12-07-1990 |
| | | | CA | 2006247 A,C | 03-07-1990 |
| | | | DE | 69017923 D | 27-04-1995 |
| | | | DE | 69017923 T | 20-07-1995 |
| | | | EP | 0377551 A | 11-07-1990 |
| | | | ES | 2071073 T | 16-06-1995 |
| | | | MX | 174446 B | 17-05-1994 |
| WO 9618982 | A | 20-06-1996 | US | 5541589 A | 30-07-1996 |